# EUROPÄISCHE PATENTSCHRIFT

(11) **EP 1 458 591 B1**
(45) Veröffentlichungstag und Bekanntmachung des Hinweises auf die Patenterteilung: **04.10.2006**
(21) Anmeldenummer: 02791801.0
(22) Anmeldetag: 10.12.2002
(51) Int. Cl.: B60N 2/56

(54) **BELÜFTUNGSSYSTEM FÜR EIN POLSTERTEIL**
VENTILATION SYSTEM FOR AN UPHOLSTERY PART
SYSTEME DE VENTILATION CON U POUR UNE PIECE DE REMBOURRAGE

(30) Priorität: 19.12.2001 DE 20120516 U
(43) Veröffentlichungstag der Anmeldung: 22.09.2004
(73) Patentinhaber: Johnson Controls GmbH, 51399 Burscheid (DE)
(72) Erfinder: HUO, Ming, 42799 Leichlingen (DE); THUNNISSEN, Jan, NL-6137 HB Sittard (NL); SCHOLL, Alfred, 45468 Mühlheim an der Ruhr (DE)
(74) Vertreter: Wolff, Felix
(86) Internationale Anmeldenummer: PCT/EP2002/013972
(87) Internationale Veröffentlichungsnummer: WO 2003/051666

(56) Entgegenhaltungen:
- EP-A- 1 086 852
- EP-A- 1 123 834
- WO-A-01/05623
- DE-A- 19 607 110
- US-A- 5 902 014
- US-B1- 6 179 706

## Beschreibung

Die vorliegende Erfindung betrifft ein Belüftungssystem für ein Polsterteil eines Sitzes, wobei mittels eines Lüftungsmittels eine Hauptiuftstromung im Wesentlichen senkrecht zu einer Anlagefläche erzeugt wird.

Derartige Belüftungssysteme sind bekannt. Diese werden für sogenannte Klimasitze an Sitzteilen und/oder Rückenlehnen eingesetzt. Das Belüftungssystem sorgt mittels eines elektromotorisch angetriebenen Sauglüfters für eine Luftdurchströmung des Polsterteils, wodurch ein angenehmes Sitzklima erreicht wird.

Nachteilig bei diesen Belüftungssystemem ist, dass die Luft bei Benutzung des Sitzes nicht durch eine besetzte Kontaktzone zwischen dem Benutzer und dem Polsterteil strömen kann. Die Luft kann allerhöchstens durch den verbleibenden freien Bereich des Polsterteils angesaugt werden. Das bedeutet, dass ein Luftdurchgang bezogen auf die Gesamtoberfläche des Polsterteils zu ca. 70% geschlossen ist Auf Grund dieser Tatsache wird der Klimaeffekt, der bekannten Klimasitze, insbesondere der Effekt der Feuchtigkeitsabfuhr stark behindert.

Aus der WO 01/05623 A1 ist ein ventilierter Kraftfahrzeugsitz bekannt, bei dem zum einen Luft durch die Sitzfläche gesaugt wird und bei der zum anderen Luft quer zur Sitzfläche strömt. Ein weiterer klimatisierter Sitz ist aus der US 6.179 706 B1 bekannt, bei dem unterhalb der Sitzfläche ein Gebläse angeordnet ist, das Kanäle, die im Bereich der Sitzfläche und der Rückenlehne angeordnet sind, mit Frischluft versorgt.

Der vorliegenden Erfindung liegt die Aufgabe zu Grunde, ein Belüftungssystem zu schaffen, welches auch bei einem besetzten Sitz den Klimaeffekt, insbesondere den Effekt der Feuchtigkeitsabfuhr deutlich verbessert.

Erfindungsgemäß wird dies durch die Merkmale des Kennzeichnenden Teils erreicht von Anspruch 1.

Hierdurch wird der Verschlusseffekt des besetzten Polsterteiles durch eine zusätzliche Luftströmung weitgehend reduziert.

Erfindungsgemäß wird die Hauptluftströmung mittels des Lüftungsmittels von der Anlagefläche zu einer der Anlagefläche gegenüberliegenden Rückseite des Polsterteils gesaugt werden. Hierfür ist das Lüftungsmittel als Sauglüfter ausgebildet. Die Nebenluftströmung wird mittels eines zusätzlichen Lüftungsmittels in das Polsterteil eingeblasen werden. Hierfür ist das zusätzliche Lüftungsmittel als Blaslüfter ausgebildet.

Andererseits wird die Hauptluftströmung durch ein als Blaslüfter ausgebildetes Lüftungsmittel von der Rückseite zur Anlagefläche gerichtet in das Polsterteil eingeblasen werden. Die Nebenluftströmung wird durch ein als Sauglüfter zusätzliches Lüftungsmittel erzeugt.

Die Nebenluftströmung bewirkt einerseits eine weitgehende Reduzierung des Verschlußeffektes und andererseits eine verstärkte Feuchtigkeitsabfuhr. Zusätzlich wird hierdurch eine sehr gute und gleichmäßige Luftverteilung erreicht, obwohl der Sitz von einem Benutzer besetzt ist.

Der Klimaeffekt beider Ausgestaltungen, insbesondere bei der Feuchtigkeitsabfuhr ist in wesentlichen gleich.

In Versuchsreihen wurde zum Beispiel das Polsterteil von 18 ° C auf 34 ° C erwärmt. Mit Einschalten des als Sauglüfter ausgebildeten Lüftungsmittels bei 34 ° C wurde die Temperaturänderung über die Zeit aufgenommen. In einem zweiten Versuch wurde das Polsterteil ebenfalls auf 34 ° C erwärmt, wobei in diesem Experiment der Sauglüfter und das als Blaslüfter verwendete zusätzliche Lüftungsmittel gleichzeitig bei 34 °C eingeschaltet wurden. Die Temperaturänderungen zeigen für beide Versuchsreihen, einen im Wesentlichen gleichen Verlauf.

Gleichzeitig wurden Messungen bezüglich der Luftfeuchtigkeitsabfuhr in beiden Versuchen aufgenommen. Hier zeigte sich deutlich, dass bei gleichzeitig eingeschaltetem Sauglüfter und zusätzlichem Blaslüfter die Luftfeuchtigkeitsabfuhr wesentlich effektiver ist als nur mit dem Sauglüfter allein.

Diese Versuche wurden für eine Rückenlehne wiederholt. Hierbei wurde zunächst die Rückenlehne von 21 ° C auf 34 ° C aufgewärmt. Sodann wurden Messungen zur Tempamturänderung Ober die Zeit durchgeführt.

Die Temperatur nahm schneller auf Grund des eingeschalteten zusätzlichen Blaslüfters ab. Auch hier wurde ebenfalls die Luftfeuchtigkeitsabfuhr gemessen. Hierbei ist festzustellen, dass die Luftfeuchtigkeitsabfuhr mit gleichzeitig eingeschaltetem Saug- und zusätzlichem Blaslüfter wesentlich verbessert ist, als wenn diese lediglich mit dem Sauglüfter abgeführt wird.

Die zuvor genannten Versuche wurden auch für die erfindungsgemäße Ausgestaltung durchgeführt, in der das Lüftungsmittel als Blaslüfter und das zusätzliche Lüftungsmittel als Sauglüfter verwendet werden. Die Ergebnisse zur Luftfeuchtigkeitsabfuhr entsprechen im Wesentlichen den zuvorgenannten.

Weitere vorteilhafte Ausgestaltungsmerkmale der Erfindung sind in den Unteransprüchen offenbart.

An Hand eines in den Zeichnungen skizzenhaft dargestellten Ausführungsbeispiels soll die Erfindung genauer erläutert werden. Dabei zeigen:
- Figur 1: einen Vertikalschnitt durch ein Polsterteil mit einem erfindungsgemäßen Belüftungssystem,
- Figur 2: eine Draufsicht auf das Belüftungssystem,
- Figur 3: eine Draufsicht auf eine andere Ausgestaltung des Belüftungssystems,
- Figur 4: eine prinzipielle Darstellung der Luftströmung mit geblasener Nebenluftströmung,
- Figur 5: eine prinzipielle Darstellung der Luftströmung mit gesaugter Nebenluftströmung,

In den verschiedenen Figuren sind die gleichen Teile mit denselben Bezugszeichen versehen, so dass sie in der Regel jeweils nur einmal beschrieben werden.

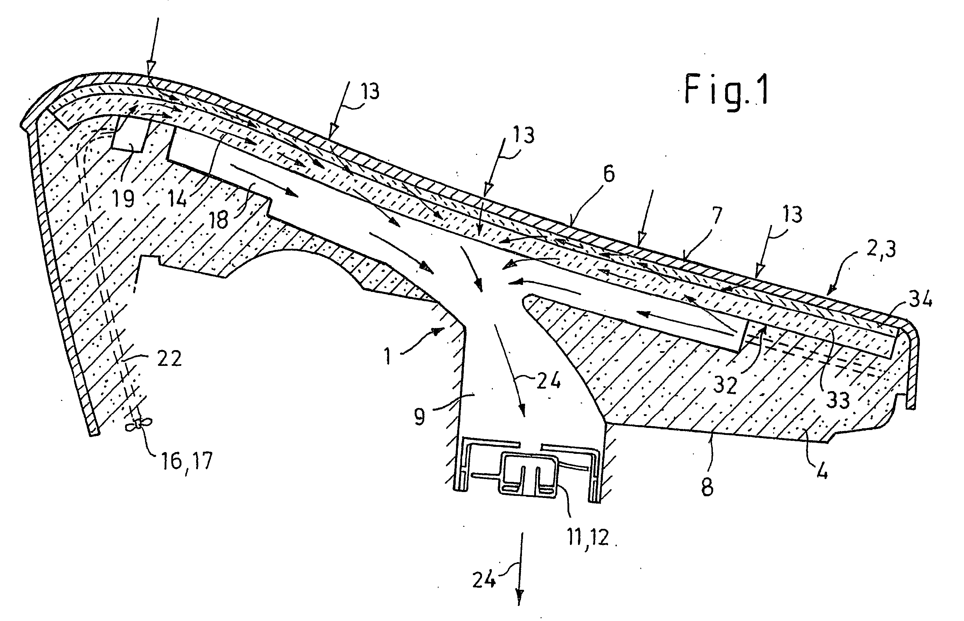

Figur 1 zeigt ein Belüftungssystem 1 in einem Polsterteil 2 eines Sitzes. Das Polsterteil 2 ist in dem dargestellten Beispiel als Sitzteil 3 ausgebildet. Das Belüftungssystem 1 kann aber auch in einem Polsterteil einer nicht dargestellten Rückenlehne des Sitzes angeordnet sein.

Das Polsterteil 2 weist einen Formkörper 4 auf. Dieser Formkörper 4 besteht vorzugsweise aus einem Schaumstoff. Der Formkörper 4 ist an seiner Anlagefläche 6 mit einem luftdurchlässigen Bezugsmaterial 7 bespannt. Das luftdurchlässige Bezugsmaterial 7 besteht vorzugsweise aus einem textilen Material, kann aber auch aus perforiertem Leder oder Kunstleder bestehen. Von einer der Anlagefläche 6 gegenüberliegenden Rückseite 8 ist eine zur Anlagefläche 6 und zur Rückseite 8 offene Anschlußöffnung 9 in den Formkörper 4 eingebracht. Mit der Anschlußöffnung 9 ist auf der Rückseite 8 ein Lüftungsmittel 11 mittels eines Anschlußteils verbunden. In diesem Ausführungsbeispiel ist das Lüftungsmittel 11 als Sauglüfter 12 ausgebildet.

Der Sauglüfter 12 erzeugt eine Hauptluftströmung 13, die im Wesentlichen senkrecht zu der Anlagefläche 6 durch das luftdurchlässige Bezugsmaterial 7 in das Polsterteil 2 gesaugt wird.

Erfindungsgemäß wird quer zu der Hauptluftströmung 13 eine Nebenluftströmung 14 in dem Polsterteil 2 erzeugt. Hierfür wird ein zusätzliches Lüftungsmittel 16 verwendet, das in diesem Ausführungsbeispiel als zusätzlicher Blaslüfter 17 ausgebildet ist.

Dadurch, dass die Nebenluftströmung 14 zusätzlich in das Polsterteil 2 eingeblasen wird, wird der Verschlußeffekt des besetzten Polsterteils 2 weitgehend aufgehoben.

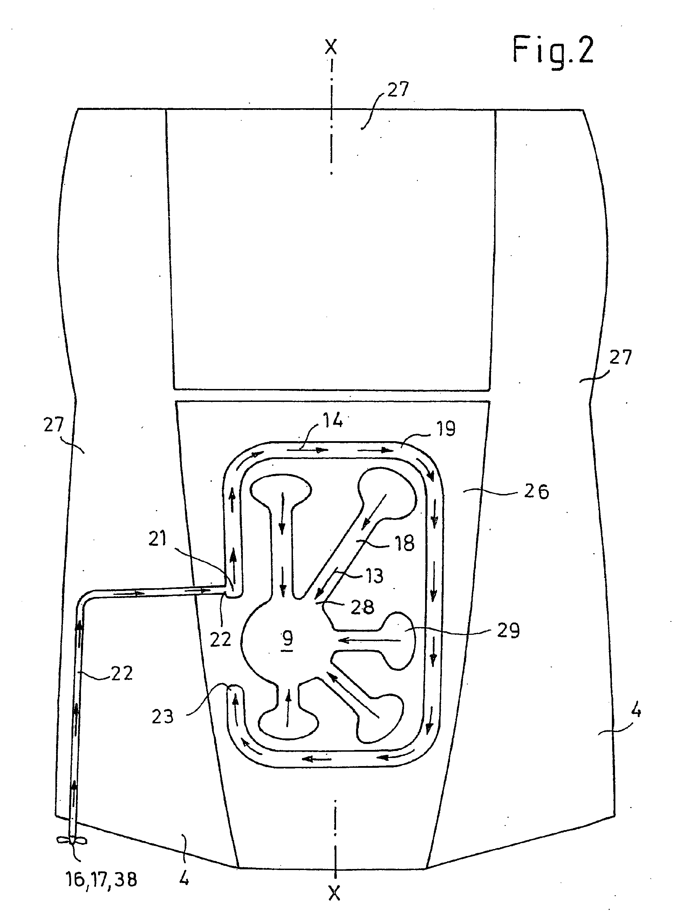

Die Hauptluftströmung 13 wird in dem dargestellten Ausführungsbeispiel in Kanälen 18 gefördert, die von einem ringförmigen Kanal 19 umschlossen sind (vgl. Fig.2). In dem ringförmigen Kanal 19 wird die Nebenluftströmung 14 gefördert. Hierzu ist der ringförmige Kanal 19 mit einem Ende 21 über eine Anschlußöffnung 22 mit der Ausblasseite des Blaslüfters 17 verbunden. An dem dazu gegenüberliegenden Kanalende 23 ist der ringförmige Kanal 19 geschlossen. Möglich ist, dass mehrere Anschlußöffnungen in dem ringförmigen Kanal 19 angeordnet sind. Die Anschlußöffnung 22 ist durch den Formkörper 4 zu dem Blaslüfter 17 geführt. In der Anschlußöffnung 22 kann ein Luftröhrchen angeordnet sein, das in dem Übergang der Anschlußöffnung 22 zu den Kanalenden 21 und/oder 23 endet. Das Luftröhrchen kann aber auch in dem ringförmigen Kanal 19 weitergeführt werden, wobei dieses zur Anlagefläche 6 mit beabstandeten Öffnungen zum Luftdurchgang versehen ist.

Die Kanäle 18,19 sind in dem Formteil 4 eingebracht und zur Anlagefläche 6 geöffnet. Hierdurch vermischen sich die Hauptluftströmung und die Nebenluftströmung zu einem einzigen Luftstrom 24. Der ringförmige Kanal 19 ist nutartig in den Formkörper 4 eingebracht und weist im Querschnitt eine im wesentlichen U-förmige Ausgestaltung auf, kann aber auch in anderen geometrische Formen ausgestaltet sein, z.B. im Querschnitt halbkreisförmig (Vgl. Fig. 1).

Wie Figur 2 weiter zeigt, besteht das Polsterteil 2 aus einem mittleren Sitzflächenbereich 26, der von seitlichen und vorderen Stützpolstern 27 umgeben ist. In dem mittleren Sitzflächenbereich 26 sind die Kanäle 18,19 in dem Formteil 4 eingebracht. Die Anschlußöffnung 9 ist in dem mittleren Sitzflächenbereich 26 vorzugsweise außermittig d.h. seitlich zu einer Mittelachse X-X versetzt und in der Nähe der nicht dargestellten Rückenlehne angeordnet.

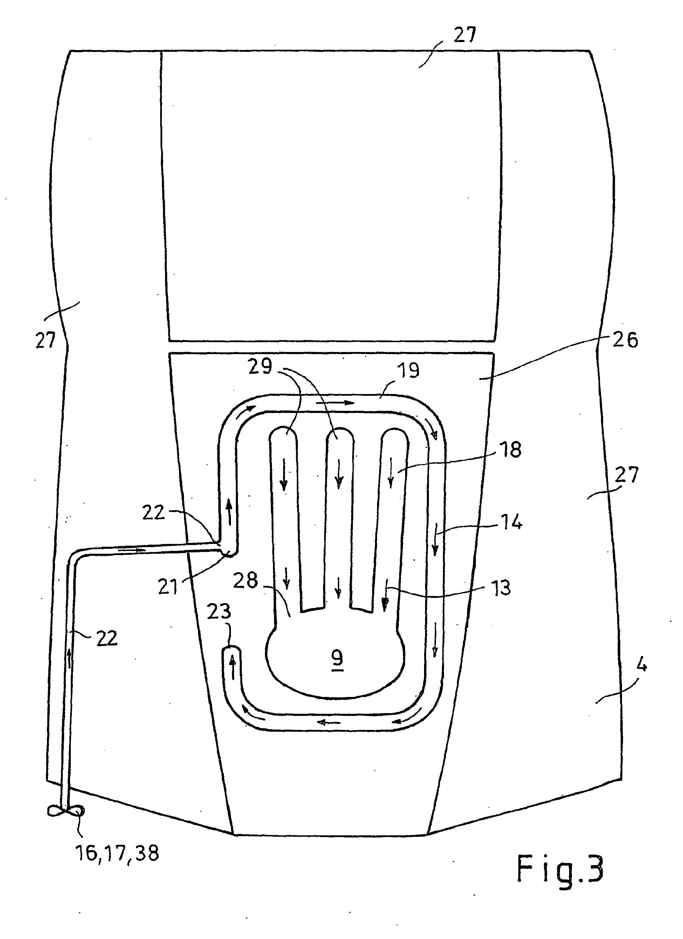

Die Kanäle 18 sind ausgehend von der Anschlußöffnung 9 strahlenförmig verlaufend in dem Formteil 4 eingebracht, und weisen vorzugsweise im Querschnitt eine U-förmige Ausgestaltung auf. Mit einem Ende 28 sind diese mit der Anschlußöffnung 9 verbunden und an ihrem anderen Ende 29 vorteilhafterweise kreisförmig oder ellipsenförmig vorzugsweise erweitert ausgebildet. Dadurch, dass die Anschlußöffnung 9 dezentral in dem Formteil 4 angeordnet ist, besitzen die Kanäle 18 unterschiedliche Längen, wobei diese nahe an den ringförmigen Kanal 19 geführt sind. In einer in Figur 3 dargestellten Ausgestaltung verlaufen die Kanäle 18 im Wesentlichen parallel zueinander, wobei die Anschlußöffnung 9 in der Nähe der nicht dargestellten Rückenlehne angeordnet ist

Zwischen dem Formteil 4 und dem luftdurchlässigen Bezugsmaterial 7 ist eine luftdurchlässige Zwischenschicht 31 angeordnet. Diese besteht ausgehend von dem Formteil 4 insbesondere aus einer luftdurchlässigen, steifen Platte 32, einer Auflage 33, und einer Heizmatte 34 (vgl. Fig. 1).

Zur Abdeckung der zur Anlagefläche 6 offenen Kanäle 18,19 trägt der Formkörper 4 die luftdurchlässige, steife Platte 32. Auf die Platte 32 ist die Auflage 33 aus stark durchlässigem Material, vorzugsweise aus sogenanntem Gummihaar gelegt. Diese ist in Randbereichen des mittleren Sitzflächenbereiches 26 gegenüber dem Formkörper 4 und den darin angeordneten Kanälen 18,19 abgedichtet. Diese Auflage 33 trägt die Heizmatte 34. Die Heizmatte 34 weist vorzugsweise in einem Bereich, in dem beim Sitzen ein Berührungskontakt auf dem mittleren Sitzflächenbereich 26 entsteht, eine Sensorik zur Steuerung der Lüftungsmittel 11,16 auf, so dass die Lüftungsmittel 11 und/oder16 bei Erreichen einer bestimmten Temperatur eingeschaltet werden können. Vorteilhafterweise ist aber auch ein manuelles Einschalten der Lüftungsmittels 11 und/oder 16 möglich, wobei hier das subjektive Temperaturempfinden eines Benutzers ausschlaggebend sein kann.

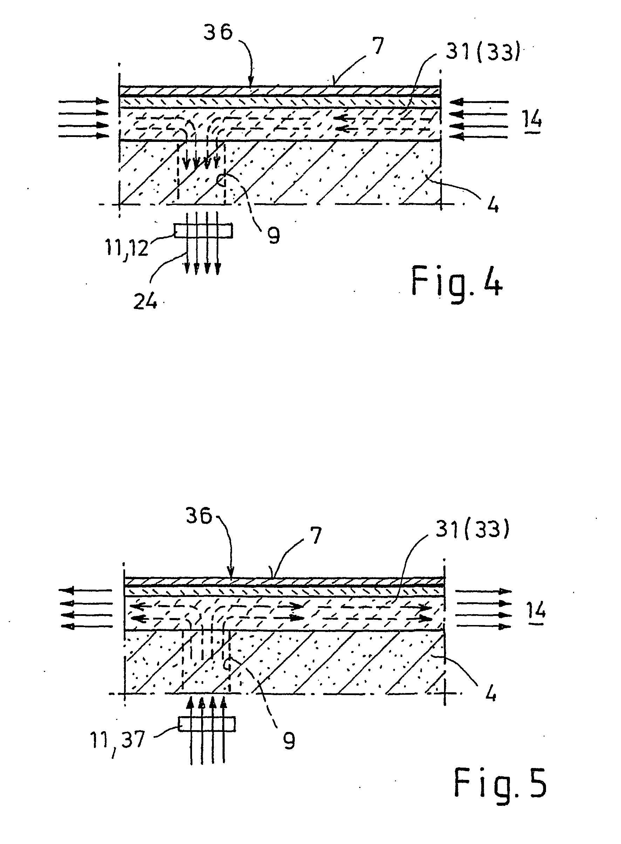

In den Figuren 4 und 5 ist jeweils eine Kontaktzone 36 des mittleren Sitzflächenbereiches 26 dargestellt, die durch eine nicht dargestellte Person auf der Anlagefläche 6 verschlossen ist.

Wie bereits beschrieben kann das Lüftungsmittel 11 als Sauglüfter 12 und das zusätzliche Lüftungsmittel 16 als zusätzlicher Blaslüfter 17 verwendet werden. Das Lüftungsmittel 11 kann aber auch als Blaslüfter 37 eingesetzt werden, wobei das zusätzliche Lüftungsmittel 16 als zusätzlicher Sauglüfter 38 verwendet wird.

In Figur 4 ist dargestellt, dass durch die verschlossene Kontaktzone 36 mittels des Sauglüfters 12 keine Hauptluftströmung 13 in das Polsterteil 2 gesaugt werden kann. Um diesen Verschlußeffekt weitgehend aufzuheben, wird mittels des zusätzlichen Blaslüfters 17 die Nebenluftströmung 14 über den ringförmigen Kanal 19 in das Polsterteil 2 unter die Kontaktzone 36 geblasen. Hierdurch wird vorteilhaft erreicht, dass insbesondere die Feuchtigkeitsabfuhr verbessert wird.

In Figur 5 dagegen ist dargestellt, dass die Hauptluftströmung 13, die von dem Blaslüfter 37 in das Polsterteil 2 geblasen wird, nicht durch die verschlossene Kontaktzone 36 in die Umgebung gelangen kann. Dadurch, dass der ringförmige Kanal 19 an eine Saugseite des zusätzlichen Sauglüfters 38 angeschlossen ist, wird eine Luftströmung aufrechterhalten, die vorteilhafterweise die Feuchtigkeitsabfuhr bewirkt. Hierdurch wird ebenfalls ein angenehmes Klima im Bereich der Kontaktzone 36 erreicht.

Die Erfindung ist nicht auf das dargestellte Ausführungsbeispiel beschränkt, sondern umfaßt auch alle im Sinne der Erfindung gleichwirkenden Ausführungen.

## Patentansprüche

1. Belüftungssystem für ein Polsterteil (2) eines Sitzes, wobei mittels eines Lüftungsmittels (11) eine Hauptluftströmung (13) im wesentlichen senkrecht zu einer Anlagefläche (6) des Polsterteils (2) erzeugt wird, wobei im Wesentlichen quer zur Hauptluftströmung (13) eine Nebenluftströmung (14) in dem Polsterteil (2) erzeugt wird, wobei die Hauptluftströmung (13) mittels des Lüftungsmittels (11) von der Anlagefläche (6) zu einer der Anlagefläche (6) gegenüberliegenden Rückseite (8) des Polsterteils (2) gesaugt wird oder die Haupbuftströmung (13) mittels des Lüftungsmittels (11) von einer zur Anlagefläche (6) gegenüberliegenden Rückseite (8) zur Anlagefläche (6) gerichtet in das Polsterteil (2) geblasen wird, **dadurch gekennzeichnet, dass** die Nebenluftströmung (14) mittels eines zusätzlichen Lüftungsmittels (16) in das Polsterteil (2) eingeblasen wird oder die Nebenluftströmung (14) mittels eines zusätzlichen Lüftungsmittels (16) aus dem Polsterteil (2) gesaugt wird.

2. Belüftungssystem nach Anspruch 1,
**dadurch gekennzeichnet, dass**
die Hauptuftströmung (13) in Kanälen (18) gefördert wird, die von einem ringförmigen Kanal (19) umschlossen sind, in dem die Nebenluftströmung (14) gefördert wird, wobei die jeweiligen Kanäle (18,19) zur Anlagefläche (6) geöffnet sind.

3. Belüftungssystem nach einem der Ansprüche 1 bis 2,
**dadurch gekennzeichnet, dass**
das Polsterteil (2) ein Formteil (4) aufweist, in dem eine Anschlußöffnung (9) vorzugsweise außermittig angeordnet ist, mit der das Lüftungsmittel (11) verbunden ist.

4. Belüföungssystem nach Anspruch 3,
**dadurch gekennzeichnet, dass**
in dem Formkörper (4) die zur Anlagefläche (6) offenen Kanäle (18,19) eingebracht sind, wobei in der Anschlußöffnung (9) die Kanäle (18) mit einem Ende (28) münden.

5. Belüftungssystem nach einem der Ansprüche 2 bis 4,
**dadurch gekennzeichnet, dass**
die Kanäle (18) strahlenförmig von der Anschlußöffnung (9) weggerichtet sind, wobei ein jeweils anderes Ende (29) der Kanäle (18) geschlossen ist.

6. Belüftungssystem nach einem der Ansprüche 2 bis 4,
**dadurch gekennzeichnet, dass**
die Kanäle (18) parallel zu einander verlaufen, wobei ein jeweils anderes Ende (29) geschlossen ist.

7. Belüftungssystem nach einem der Ansprüche 5 bis 6,
**dadurch gekennzeichnet, dass**
das jeweils andere Ende (29) der Kanäle (18) kreisförmig und/oder ellipsenförmig ausgebildet ist.

8. Belüftungssystem nach einem der Ansprüche 2 bis 7,
**dadurch gekennzeichnet, dass**
der ringförmige Kanal (19) an einem Ende (21) über eine Anschlußöffnung (22) mit dem zusätzlichen Lüftungsmittel (16) verbunden ist, wobei sein anderes Ende (23) geschlossen ist.

9. Belüftungssystem nach Anspruch 8,
**dadurch gekennzeichnet, dass**
das an beiden Enden (21, 23) des ringförmigen Kanals (19) jeweils eine Anschlußöffnung (22) für das zusätzliche Lüftungsmittel (16) angeordnet ist.

10. Belüftungssystem nach einem der Ansprüche 1 bis 9,
**dadurch gekennzeichnet, dass**
das Polsterteil (2) zwischen dem Formkörper (4) und einem auf das Formteil (4) gespannten luftdurchlässigen Bezugsmaterial (7) eine luftdurchlässige Zwischenschicht (31) aufweist.

11. Belüftungssystem nach Anspruch 10,
**dadurch gekennzeichnet, dass**
die Zwischenschicht (31) vorzugsweise aus einer luftdurchlässigen steifen Platte (32), einer Auflage (33) und einer Heizmatte (34) besteht.

12. Belüftungssystem nach Anspruch 10 oder 11,
**dadurch gekennzeichnet, dass**
der Formkörper (4) zur Abdeckung der geöffneten Kanäle die luftdurchlässige, steife. Platte (32) trägt, auf der die Auflage (33) aus stark durchlässigem Material, vorzugsweise aus sogenanntem Gummihaar aufgelegt ist, die in Randbereichen des Formkörpers (4) gegenüber diesem und den darin angeordneten Kanälen (18, 19) abgedichtet ist, wobei die elektrische Heizmatte (34) auf die Auflage (33) gelegt ist.

13. Belüftungssystem nach Anspruch 11 oder 12,
**dadurch gekennzeichnet, dass**
die Heizmatte (34) vorzugsweise eine Sensorik zur Steuerung des Lüftungsmittels (11) und/oder des zusätzlichen Lüftungsmittels (16) aufweist.

14. Belüftungssystem nach einem der Ansprüche 1 bis 13,
**dadurch gekennzeichnet, dass**
die Lüftungsmittel (11 und/oder 16) manuell einschaltbar sind.

## Claims

1. Ventilation system for an upholstery part (2) of a seat, wherein a ventilating means (11) produces a main air flow (13) essentially perpendicularly to an abutment surface (6) of the upholstery part (2), wherein a secondary air flow (14) is produced in the upholstery part (2) essentially perpendicularly to the main air flow (13), and wherein the ventilating means (11) sucks the main air flow (13) from the abutment surface (6) to a rear side (8) of the upholstery part (2), the rear side being located opposite the abutment surface (6), or the ventilating means (11) blows the main air flow (13) into the upholstery part (2) in the direction of the abutment surface (6) from a rear side (8), which is located opposite the abutment surface (6), **characterized in that** the secondary air flow (14) is blown into the upholstery part (2) by an additional ventilating means (16) or the secondary air flow (14) is sucked out of the upholstery part (2) by an additional ventilating means (16).

2. Ventilation system according to Claim 1, **characterized in that** the main air flow (13) is fed in channels (18) which are enclosed by an annular channel (19) in which the secondary air flow (14) is fed, the respective channels (18, 19) being open in the direction of the abutment surface (6).

3. Ventilation system according to either of Claims 1 and 2, **characterized in that** the upholstery part (2) has a moulding (4) in which is arranged, preferably excentrically, an attachment opening (9), to which the ventilating means (11) is connected.

4. Ventilation system according to Claim 3, **characterized in that** the channels (18, 19), which are open in the direction of the abutment surface (6), are made in the moulding (4), the channels (18) having one end (28) opening out in the attachment opening (9).

5. Ventilation system according to one of Claims 2 to 4, **characterized in that** the channels (18) are directed radially away from the attachment opening (9), a respectively other end (29) of the channels (18) being closed.

6. Ventilation system according to one of Claims 2 to 4, **characterized in that** the channels (18) run parallel to one another, a respectively other end (29) being closed.

7. Ventilation system according to either of Claims 5 and 6, **characterized in that** the respectively other end (29) of the channels (18) is of circular and/or elliptical formation.

8. Ventilation system according to one of Claims 2 to 7, **characterized in that** the annular channel (19) is connected at one end (21), via an attachment opening (22), to the additional ventilating means (16), its further end (23) being closed.

9. Ventilation system according to Claim 8, **characterized in that** a respective attachment opening (22) for the additional ventilating means (16) is arranged at the two ends (21, 23) of the annular channel (19).

10. Ventilation system according to one of Claims 1 to 9, **characterized in that** the upholstery part (2) has an air-permeable intermediate layer (31) between the moulding (4) and an air-permeable covering material (7) fitted onto the moulding (4).

11. Ventilation system according to Claim 10, **characterized in that** the intermediate layer (31) preferably comprises a stiff air-permeable panel (32), a bearing means (33) and a heating mat (34).

12. Ventilation system according to Claim 10 or 11, **characterized in that** the moulding (4), for covering the open channels, bears the stiff air-permeable panel (32), on which is positioned the bearing means (33), which is made of highly permeable material, preferably of so-called rubberized hair, and, in peripheral regions of the moulding (4), is sealed in relation to the latter and the channels (18, 19) arranged therein, the electric heating mat (34) being positioned on the bearing means (33).

13. Ventilation system according to Claim 11 or 12, **characterized in that** the heating mat (34) preferably has a sensor system for controlling the ventilating means (11) and/or the additional ventilating means (16).

14. Ventilation system according to one of Claims 1 to 13, **characterized in that** the ventilating means (11 and/or 16) can be switched on manually.

## Revendications

1. Système d'aération pour un élément de rembourrage (2) d'un siège, à l'aide d'un moyen d'aération (11), un courant d'aération principal (13) étant généré sensiblement à la perpendiculaire d'une surface d'appui (6) de l'élément de rembourrage (2), un courant d'air auxiliaire (14) étant généré sensiblement à la transversale du courant d'air principal (13) dans l'élément de rembourrage (2), le courant d'air principal (13) étant aspiré à l'aide du moyen d'aération (11) de la surface d'appui (6) vers une face arrière de l'élément de rembourrage (2) opposée à la surface d'appui (6) ou le courant d'air principal (13) étant dirigé dans l'élément de rembourrage (2) à l'aide du moyen d'aération (11), d'une face arrière (8) opposée à la surface d'appui (6) vers la surface d'appui (6), **caractérisé en ce que** le courant d'air auxiliaire (14) est insufflé dans l'élément de rembourrage (2) à l'aide d'un moyen d'aération supplémentaire (16) ou le courant d'air auxiliaire (14) est aspiré hors de l'élément de rembourrage (2) à l'aide d'un moyen d'aération supplémentaire (16).

2. Système d'aération selon la revendication 1,
**caractérisé en ce que**
le courant d'air principal (13) est transporté dans des conduits (18) qui sont entourés par un conduit annulaire (19) dans lequel le courant d'air auxiliaire (14) est transporté, les conduits respectifs (18, 19) étant ouverts sur la surface d'appui (6).

3. Système d'aération selon l'une quelconque des revendications 1 à 2,
**caractérisé en ce que**
l'élément de rembourrage (2) comporte une pièce moulée (4) dans laquelle un orifice de raccordement (9) avec lequel le moyen d'aération (11) est relié est disposé de préférence de façon excentrée.

4. Système d'aération selon la revendication 3,
**caractérisé en ce que**
les conduits (18, 19) ouverts sur la surface d'appui (6) sont ménagés dans le corps moulé (4), les conduits (18) débouchant avec une extrémité (28) dans l'orifice de raccordement (9).

5. Système d'aération selon l'une quelconque des revendications 2 à 4,
**caractérisé en ce que**
les canaux (18) sont dirigés en s'éloignant en forme de rayon de l'orifice de raccordement (9), une autre extrémité respective (29) des conduits (18) étant fermée.

6. Système d'aération selon l'une quelconque des revendications 2 à 4,
**caractérisé en ce que** les conduits (18) sont mutuellement parallèles, une autre extrémité respective (29) étant fermée.

7. Système d'aération selon l'une quelconque des revendications 5 à 6,
**caractérisé en ce que**
l'autre extrémité respective (29) des conduits (18) est conçue sous forme circulaire et/ou sous forme elliptique.

8. Système d'aération selon l'une quelconque des revendications 2 à 7,
**caractérisé en ce que** par une extrémité (21), le conduit annulaire (19) est relié par l'intermédiaire d'un orifice de raccordement (22) avec le moyen d'aération supplémentaire (16), son autre extrémité (23) étant fermée.

9. Système d'aération selon la revendication 8,
**caractérisé en ce que**
un orifice de raccordement (22) pour le moyen d'aération supplémentaire (16) est disposé sur les deux extrémités (21, 23) du canal annulaire (19).

10. Système d'aération selon l'une quelconque des revendications 1 à 9,
**caractérisé en ce que** l'élément de rembourrage (2) comporte une couche intermédiaire perméable à l'air (31) entre le corps moulé (4) et une matière de revêtement (7) perméable à l'air, tendue sur le corps moulé (4).

11. Système selon la revendication 10,
**caractérisé en ce que** la couche intermédiaire (31) est constituée de préférence d'une plaque rigide perméable à l'air (32), d'un support (33) et d'une natte chauffante (34).

12. Système d'aération selon l'une quelconque des revendications 10 ou 11,
**caractérisé en ce que**
pour recouvrir le conduit ouvert, le corps moulé (4) porte la plaque perméable à l'air (32), sur laquelle est posé le support (33) en matériau hautement perméable, de préférence en dénommé poil en caoutchouc, qui dans des zones de bordure du corps moulé (4) est rendu étanche par rapport à ce dernier et aux conduits (18, 19) qui y sont disposés, la natte chauffante électrique (34) étant posée sur le support (33).

13. Système d'aération selon l'une quelconque des revendications 11 ou 12,
**caractérisé en ce que** la natte chauffante (34) comporte de préférence un système de capteurs pour commander le moyen d'aération (11) et/ou le moyen d'aération supplémentaire (16).

14. Système d'aération selon l'une quelconque des revendications 1 à 13,
**caractérisé en ce que**
les moyens d'aération (11 et/ou 16) peuvent être commutés manuellement.
